# EUROPÄISCHE PATENTSCHRIFT

(11) **EP 2 735 452 B1**
(45) Veröffentlichungstag und Bekanntmachung des Hinweises auf die Patenterteilung: **16.01.2019**
(21) Anmeldenummer: 13183625.6
(22) Anmeldetag: 10.09.2013
(51) Int. Cl.: B60C 11/03, B60C 11/13

(54) **Fahrzeugluftreifen**
Pneumatic tyres for a vehicle
Pneus de véhicule

(30) Priorität: 22.11.2012 DE 102012111297
(43) Veröffentlichungstag der Anmeldung: 28.05.2014
(73) Patentinhaber: Continental Reifen Deutschland GmbH, 30165 Hannover (DE)
(72) Erfinder: Schulze, Thomas, 30171 Hannover (DE); Bäuning, Daniel, 30161 Hannover (DE); Wirth, Christian, 31535 Neustadt (DE)
(74) Vertreter: Finger, Karsten

(56) Entgegenhaltungen:
- JP-A- H05 213 014
- JP-A- H05 338 418
- JP-A- H06 297 917
- JP-A- H09 175 120

## Beschreibung

Die Erfindung betrifft ein Laufstreifenprofil eines Fahrzeugreifens - insbesondere eines Fahrzeugluftreifens - mit wenigstens einer über den Umfang des Reifens erstreckten und in axialer Richtung A durch zwei Umfangsrillen begrenzten Profilblockreihe, welche aus in Umfangrichtung U des Reifens hintereinander angeordneten und jeweils durch erste Querrillen von einander beabstandeten Paaren von Profilblockelementen ausgebildet ist, **welche in radialer Richtung R nach außen hin durch eine die Bodenkontaktoberfläche bildende radial äußere Oberfläche begrenzt werden,** wobei jedes Paar von Profilblockelementen zwei in Umfangsrichtung U hintereinander angeordnete und durch eine zweite Querrille voneinander beabstandete Profilblockelemente aufweist und wobei die ersten und die zweiten Querrillen sich jeweils - insbesondere geradlinig - ausgehend von der einen die Profilblockreihe begrenzenden Umfangrille bis in die andere die Profilblockreihe begrenzende Umfangrille erstrecken.

Derartige Laufstreifenprofile sind bekannt. Die Ausbildung der Profilblockreihen mit durch Querrillen voneinander beabstandeten Profilblockelementen ermöglicht mit Hilfe der Querrillen die Ableitung von Wasser aus dem Laufstreifenprofil in die Umfangsrillen. Um ausreichende Trockenbremseigenschaften zu ermöglichen, werden die Querrillen in Umfangsrichtung mit möglichst großem Abstand zueinander angeordnet. Hierdurch können die von jeweils zwei benachbarten Querrillen begrenzten Profilblockelemente mit einer relativ hohen Umfangssteifigkeit ausgebildet werden. Die beim Trockenbremsen über die radial äußere Oberfläche der Profilblockelemente eingeleitete Kraft kann somit zuverlässig übertragen werden, da bei hoher Umfangssteifigkeit die Profilelemente keine große Verformung zeigen, die die Kontaktfläche verringern würde. Die großen Abstände der Querrillen ermöglichen somit die Umsetzung eines guten Trockenbremsverhaltens. Große Abstände der voneinander beabstandeten Querrillen reduzieren jedoch auch die Aufnahmekapazität von Wasser im Bereich der Profilblockreihe. Bei nassen Straßenoberflächen kann sich hierdurch relativ schnell eine Nässeschicht aufbauen, welche zwischen dem Profilblockelement und der Straßenoberfläche die Kraftübertragung behindert, wodurch besonders das Bremsen auf nassen Straßen erschwert wird.

Es ist bekannt, zur Verbesserung des Nassbremsens innerhalb der Profilblockelemente zusätzliche Feineinschnitte auszubilden, durch welche der Griff zur Straßenoberfläche auf nasser Straße etwas verbessert werden kann, wobei die geringe Dicke der Feineinschnitte ihren negativen Einflusses auf die Umfangssteifigkeit des Profilblockelementes und somit auf dessen Bremsverhalten auf trockener Straßenoberfläche etwas begrenzt. Auch wenn die durch die Feineinschnitte gebildeten Griffkanten den Wasserfilm durchbrechen, kann hierdurch zwar eine zusätzliche Griffkante und somit der Nassgriff etwas verbessert werden. Der durch die Griffkante sich aufbauende bugförmige Wasserberg kann durch die schmal ausgebildeten Feineinschnitte jedoch nur begrenzt abgeführt werden. Die positive Wirkung auf die Nassbremseigenschaft wird hierdurch weiterhin beschränkt.

Aus der EP 2 388 154 A1 ist es bekannt, derartige Feineinschnitte innerhalb eines Profilblockelementes als eng beieinander liegend angeordnete Doppelfeineinschnitte auszubilden, um auf diese Weise eine Wischlippe innerhalb des Profilblockelementes zu erzeugen. Hierdurch kann der Wasserfilm zusätzlich durch die Wischlippe beim Bremsen weggeschoben und somit hinter der Wischlippe eine etwas trockenere Straßenoberfläche erzeugt werden. Die Nassbremseigenschaften des Profilblockelementes können hierdurch verbessert werden. Die Aufnahmekapazität zur Aufnahme von weggewischtem Wasser ist bei der aus der EP 2 388 154 A1 bekannten Ausbildung immer noch etwas beschränkt. Durch die zur Sicherung guter Trockenbremseigenschaften im Profilblockelement selbst ausgebildeten Doppelfeineinschnitte kann zwar im Bereich des in Umfangsrichtung hinter dem Doppelfeineinschnitt ausgebildeten Erstreckungsabschnitt des Profilblockelementes eine trockenere Straßenoberfläche zur Verbesserung der Bremseigenschaften erzeugt werden. Allerdings bedingt der zur Sicherstellung der hohen Steifigkeit des Profilblockelementes im Profilblockelement vorgeschlagene Doppelfeineinschnitt nur eine beschränkte Flexibilität der Lippe. Die Wischwirkung wird hierdurch noch eingeschränkt. Der vor der Wischlippe sich aufbauende bugwellenförmige Wasserberg kann darüber hinaus nur in begrenztem Umfang aufgenommen werden. Somit ist bei der in der EP 2 388 154 A1 vorgeschlagenen Ausbildung von Profilblockelementen mit Doppelfeineinschnitt zwar eine Verbesserung des Bremsens auf nasser Oberfläche bei Aufrechterhaltung guter Bremseigenschaften auf trockener Oberfläche ermöglicht, aber immer noch in beschränktem Umfang.

**Aus der** JP H 06-297917 A **ist es bekannt in durch lediglich eine Umfangsrille begrenzten Schulterprofilblockreihen, welche aus durch Querrillen voneinander getrennt ausgebildeten Profilblockelementen ausgebildet sind, die in radialer Richtung nach außen hin durch eine radial äußere Oberfläche begrenzt werden, im Rillengrund der Querrillen Erhebungen auszubilden, die in radialer Richtung nach außen bis in eine Position deutlich unterhalb der die Profilblockelemente der Profilblockreihen begrenzenden radial äußeren Oberflächen reichen und dort enden.**

Der Erfindung liegt daher die Aufgabe zugrunde, mit einfachen Mitteln zu ermöglichen, das Bremsverhalten auf nasser Straßenoberfläche weiter zu verbessern bei gleichzeitiger Sicherstellung guter Bremseigenschaften auf trockener Straßenoberfläche.

Die Aufgabe wird erfindungsgemäß durch die Ausbildung eines Laufstreifenprofils eines Fahrzeugreifens - insbesondere eines Fahrzeugluftreifens - mit wenigstens einer über den Umfang des Reifens erstreckten und in axialer Richtung A durch zwei Umfangsrillen begrenzten Profilblockreihe, welche aus in Umfangrichtung U des Reifens hintereinander angeordneten und jeweils durch erste Querrillen von einander beabstandeten Paaren von Profilblockelementen ausgebildet ist, **welche in radialer Richtung R nach außen hin durch eine die Bodenkontaktoberfläche bildende radial äußere Oberfläche begrenzt werden,** wobei jedes Paar von Profilblockelementen zwei in Umfangsrichtung U hintereinander angeordnete und durch eine zweite Querrille voneinander beabstandete Profilblockelemente aufweist und wobei die ersten und die zweiten Querrillen sich jeweils - insbesondere geradlinig - ausgehend von der einen die Profilblockreihe begrenzenden Umfangrille bis in die andere die Profilblockreihe begrenzende Umfangrille erstrecken, gemäß den Merkmalen von Anspruch 1 gelöst, bei dem das in Drehrichtung D bei Vorwärtsfahrt vorgeordnete erste Profilblockelement des Paares jeweils mit einer in Umfangsrichtung gemessenen Breite a mit 2mm≤ a ≤5mm und das nachgeordnete zweite Profilblockelement des Paares mit einer in Umfangsrichtung gemessenen Breite c mit c≥20mm ausgebildet ist und bei dem die erste Querrille jeweils mit einer in Umfangsrichtung U gemessenen Breite b₁ mit b₁ ≥1mm und die zweite Querrille jeweils mit einer in Umfangsrichtung U gemessenen Breite b₂ mit b₂ ≥1mm ausgebildet ist.

Durch diese Ausbildung wird ermöglicht, dass durch die in der Profilblockreihe in Umfangsrichtung mit großer Breite c mit c≥20mm ausgebildeten zweiten Profilblockelemente eine hohe Umfangssteifigkeit zur sicheren Übertragung der Kräfte beim Bremsen auf trockener Straßenoberfläche sicher ermöglicht wird. Das dem zweiten Profilblockelement jeweils in Drehrichtung D bei Vorwärtsfahrt vorgeordnete erste Profilblockelement ist mit der Breite a mit 2 mm ≤ a ≤ 5 mm ausreichend flexibel ausgebildet, um beim Bremsen auf nasser Straße sich soweit zu verbiegen, dass es mit der in Bremsrichtung vorderen Kante eine die Straßenoberfläche trockenwischende Wischlippe bildet. Die dem ersten Profilelement in Drehrichtung D bei Vorwärtsfahrt vorgeordnete und dieses begrenzende erste Querrille ist ausreichend breit ausgebildet, um beim Bremsen den erforderlichen Raum zu einer zum ausreichenden Beweglichkeit des ersten Profilblockelementes bereitzustellen. Hierdurch kann eine Wischlippe bereitgestellt werden, die mit höherer Wischkraft die Straßenoberfläche trockenwischen kann.

Die dem ersten Profilelement in Drehrichtung D bei Vorwärtsfahrt nachgeordnete zweite Querrille ermöglicht durch ihre Breite die Bereitstellung von ausreichendem Aufnahmevolumen für den vor der Wischlippe sich aufbauenden bugwellenartigen Wasserberg. Die Breite a des ersten Profilblockelementes ist ausreichend klein gewählt, um dem ersten Profilblockelement ausreichende Flexibilität zur Ausbildung der Wischlippenfunktion zu ermöglichen und ausreichend groß, um der Wischlippe genügend Steifigkeit für eine verbesserte Wischfunktion zu ermöglichen.

Auf diese Weise wird ermöglicht, dass die Profilblockreihe mit weiterhin guten Trockenbremseigenschaften bei weiter verbesserten Nassgriffeigenschaften ausgebildet werden kann.

Besonders vorteilhaft ist die Ausbildung eines Laufstreifenprofils gemäß den Merkmalen von Anspruch 2, wobei die Breite b₂ mit b₂ ≤5mm ausgebildet ist. Hierdurch kann in einfacher Weise eine ausreichend große Kontaktfläche bei für die Aufnahme des Wasserberges ausreichender Breite umgesetzt werden.

Besonders vorteilhaft ist die Ausbildung eines Laufstreifenprofils gemäß den Merkmalen von Anspruch 3, wobei die Breite b₁ mit b₁ ≤5mm ausgebildet ist. Hierdurch kann in einfacher Weise eine ausreichend große Kontaktfläche bei ausreichendem Platz für die Sicherstellung ausreichender Verformung umgesetzt werden.

Besonders vorteilhaft ist die Ausbildung eines Laufstreifenprofils gemäß den Merkmalen von Anspruch 4, wobei die Breite b₁ und die Breite b₂ mit b₂ > b₁ ausgebildet sind, da zur Aufnahme des Wasserberges eine breitere Rille vorteilhaft ist als sie für eine ausreichende Verformung des ersten Profilelementes notwendig ist.

Besonders vorteilhaft ist die Ausbildung eines Laufstreifenprofils gemäß den Merkmalen von Anspruch 5, wobei die ersten Querrillen mit einer in radialer Richtung R gemessenen Tiefe t₁ und die zweiten Querrillen mit einer in radialer Richtung R gemessenen Tiefe t₂ mit t₂ < t₁ und mit 3mm ≤ t₂ ausgebildet sind.

Besonders vorteilhaft ist die Ausbildung eines Laufstreifenprofils gemäß den Merkmalen von Anspruch 6, bei dem die Breite c mit 80mm ≤ c ausgebildet ist. Damit kann einfach sichergestellt werden, dass immer ein mit Wischlippe ausgestattetes erstes Profilelement im Kontaktbereich zwischen Reifen und Fahrbahn vorhanden ist.

Besonders vorteilhaft ist die Ausbildung eines Laufstreifenprofils gemäß den Merkmalen von Anspruch 7, bei dem zumindest jeweils die in Drehrichtung D bei Vorwärtsfahrt einem Paar vorgeordnet angeordnete erste Querrille und die das Paar trennende zweite Querrille parallel zueinander verlaufend angeordnet sind.

Die Erfindung wird im Folgenden an Hand der in den Figuren 1 bis 4 dargestellten Ausführungsbeispielen eines PKW-Fahrzeugluftreifens näher erläutert. Hierin zeigen
- Fig.1: einen Abschnitt eines Laufstreifenprofils eines PKW-Fahrzeugluftreifens in Draufsicht,
- Fig.2: eine Profilblockreihe des Laufstreifenprofils von Fig.1 in Schnittdarstellung gemäß Schnitt II-II von Fig.1,
- Fig.3: Darstellung der Profilblockreihe von Fig. 2 beim Bremsen auf nasser Straßenoberfläche und
- Fig.4: Darstellung der Profilblockreihe von Fig. 2 beim Abrollen auf trockener Straßenoberfläche.

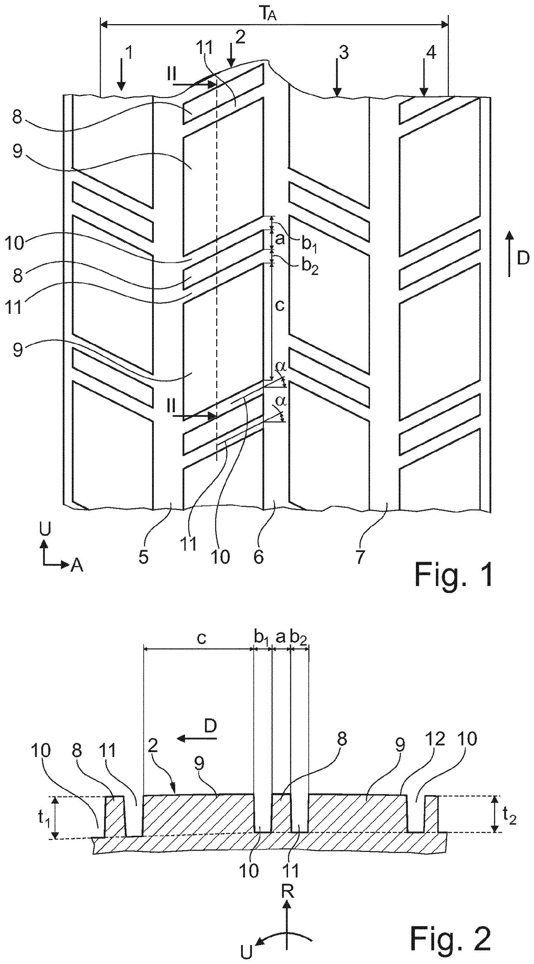

Die Figuren 1 und 2 zeigen ein Laufstreifenprofil eines Fahrzeugluftreifens für Personenkraftwagen (Pkw). Das Laufstreifenprofil ist in bekannter Weise aus mehreren in axialer Richtung A des Fahrzeugluftreifens nebeneinander angeordneten und jeweils über den Umfang des Fahrzeugluftreifens erstreckten und in Umfangsrichtung U ausgerichteten Profilblockreihen 1, 2, 3 und 4 ausgebildet. Die Profilblockreihen 1,2,3 und 4 sind jeweils durch über den Umfang des Fahrzeugluftreifens erstreckte und in Umfangsrichtung U ausgerichtete Umfangsrillen 5, 6 bzw. 7 voneinander beabstandet. Die Profilblockreihen 2 und 3 sind in axialer Richtung A des Fahrzeugluftreifens gesehen im mittleren Erstreckungsabschnitt des Laufstreifenprofils angeordnet ausgebildet und durch die Umfangsrille 6 axial voneinander beabstandet. Die Profilblockreihe 4 ist in dem in Figur 1 auf der rechten Seite dargestellten Schulterabschnitt des Reifens angeordnet ausgebildet und in axialer Richtung A von der Profilblockreihe 2 durch die Umfangsrille 5 getrennt angeordnet. Die Profilblockreihe 4 ist in dem in Figur 1 auf der rechten Seite dargestellten Schulterabschnitt des Reifens angeordnet ausgebildet und in axialer Richtung A von der Profilblockreihe 3 durch die Umfangsrille 7 getrennt angeordnet.

Die Bodenaufstandsbreite T_{A} des Fahrzeugluftreifens unter Normbedindungen gemäß E.T.R.T.O.-Standard erstreckt sich aus dem axialen Erstreckungsbereich der Schulterprofilblockreihe 1 bis in den axialen Erstreckungsbereich der Schulterprofilblockreihe 4 hinein.

Die Profilblockreihen 1, 2, 3 und 4 sind in bekannter Weise jeweils durch in Umfangsrichtung U des Fahrzeugluftreifens hintereinander verteilt angeordnete und durch Querrillen voneinander beabstandete Profilblockelemente ausgebildet.

In Figur 1 und 2 ist die Drehrichtung D des Fahrzeugluftreifens bei Vorwärtsfahrt mit Pfeildarstellung D eingetragen. Wie in Figur 1 und 2 dargestellt ist, ist die Profilblockreihe 2 aus in Umfangsrichtung U des Fahrzeugluftreifens hintereinander angeordneten Paaren von jeweils einem ersten Profilblockelement 8 und einem zweiten Profilblockelement 9 ausgebildet. Die Profilblockelemente 9 und 10 werden in bekannter Weise in radialer Richtung R nach außen hin durch eine die Bodenkontaktoberfläche bildende radial äußere Oberfläche 12 begrenzt. Zwei in Umfangsrichtung U hintereinander angeordnete Paare sind dabei jeweils durch eine erste Querrille 10 voneinander getrennt ausgebildet. Das erste Profilblockelement 8 und das zweite Profilblockelement 9 eines jeden Paares sind in Umfangsrichtung U des Fahrzeugluftreifens durch eine Querrille 11 voneinander getrennt angeordnet. Somit wird jedes erste Profilblockelement 8 durch eine erste Querrille 10 und durch eine zweite Querrille 11 in Umfangsrichtung begrenzt. Die beiden jeweils ein erstes Profilblockelement 8 begrenzenden Querrillen 10 und 11 sind parallel zueinander, geradlinig erstreckt unter Einschluss eines Neigungswinkels a zur axialen Richtung A ausgerichtet und erstrecken sich ausgehend von der einen die Profilblockreihe 2 begrenzenden Umfangsrille 5 bis zur zweiten die Profilblockreihe 2 begrenzenden Umfangsrille 6 und münden in diese ein. Der Neigungswinkel α ist dabei mit 0° ≤ α ≤ 45° ausgebildet. In dem in Figur 1 dargestellten Ausführungsbeispiel ist α mit α = 25° gewählt.

Im dargestellten Ausführungsbeispiel sind die ersten Querrillen 10 und die zweiten Querrillen 11 der Profilblockreihe 2 alle jeweils mit gleicher Neigungsorientierung ausgebildet.

Die ersten Querrillen 10 sind längs ihrer gesamten Erstreckung ausgehend von der Umfangsrille 5 bis zur Umfangsrille 6 mit einer konstanten Breite b₁ ausgebildet, welche jeweils in Umfangsrichtung U des Fahrzeugluftreifens in der radial äußeren Oberfläche 12 gemessen wird. Die zweiten Querrillen 11 sind längs ihrer gesamten axialen Erstreckung ausgehend von der Umfangsrille 5 bis zur Umfangsrille 6 hin mit einer konstanten in Umfangsrichtung U in der radial äußeren Oberfläche 12 gemessenen Breite b₂ ausgebildet, welche jeweils in Umfangsrichtung U des Fahrzeugluftreifens in der radial äußeren Oberfläche 12 gemessen wird. Die ersten Profilblockelemente 8 sind längs ihrer gesamten axialen Erstreckung ausgehend von der Umfangsrille 5 bis zur Umfangsrille 6 hin mit einer im wesentlichen konstanten Breite a ausgebildet, welche in der radial äußeren Oberfläche 12 in Umfangsrichtung U gemessen wird.

Die zweiten Profilblockelemente 9 sind mit einer maximalen Breite c ausgebildet, welche jeweils in der radial äußeren Oberfläche 12 gemessen wird und die in Umfangsrichtung U zwischen der das zweite Profilblockelement 9 begrenzenden Querrille 10 und der das Profilblockelement 9 begrenzenden Querrille 11 gemessene Erstreckung angibt. Im dargestellten Ausführungsbeispiel von Figur 1 ist das zweite Profilblockelement 9 jeweils längs seiner gesamten axialen Erstreckung A ausgehend von der Umfangsrille 5 bis zur Umfangsrille 6 mit im Wesentlichen konstanter in Umfangsrichtung U gemessener Breite c ausgebildet.

Wie in Figur 2 dargestellt ist, ist die erste Querrille 10 mit einer Tiefe t₁ ausgebildet, welche ausgehend von der radialen Position der radial äußeren Oberfläche 12 der die erste Querrille 10 begrenzenden Profilblockelemente 9 und 8 in radialer Richtung R nach innen hin bis zu dem die Querrille 10 nach radial innen hin begrenzenden Rillengrund gemessen wird. Die erste Querrille 10 ist dabei längs ihrer gesamten Erstreckung ausgehend von der Umfangsrille 5 bis zur Umfangsrille 6 mit der Tiefe t₁ ausgebildet. Die zweite Querrille 11 ist mit einer Tiefe t₂ ausgebildet, welche ausgehend von der radialen Position der radial äußeren Oberfläche 12 der die zweite Querrille 11 begrenzenden Profilblockelemente 9 und 8 in radialer Richtung R nach innen hin bis zu dem die Querrille 11 nach radial innen hin begrenzenden Rillengrund gemessen wird. Die zweite Querrille 11 ist dabei längs ihrer gesamten Erstreckung ausgehend von der Umfangsrille 5 bis zur Umfangsrille 6 mit der Tiefe t₂ ausgebildet.

Die Breiten b₂ und b₁ sind dabei mit 1 mm ≤ b₂ ≤ 5 mm und 1 mm ≤ b₁ ≤ 5 mm ausgebildet, wobei b₂ > b₁ ausgebildet ist. Beispielsweise ist b₂ mit b₂ = 4 mm und b₁ mit b₁ = 3 mm ausgebildet. Die Breite a des ersten Profilblockelementes 8 ist mit 2mm ≤ a ≤ 5mm ausgebildet. Im dargestellten Ausführungsbeispiel ist a = 4 mm ausgebildet. Die Breite c der zweiten Profilblockelemente ist mit 80mm ≥c≥ 20mm ausgebildet. Beispielsweise ist c mit c = 40 mm ausgebildet.

In einem - nicht dargestellten - Ausführungsbeispiel ist c dabei der Pitchfolgenvariation eines gewünschten Laufstreifenprofiles entsprechend mit Werten unterschiedlicher Größe ausgebildet, wobei die verschiedenen zweiten Profilblockelemente 2 dabei jeweils mit einer Größe c innerhalb des Bereiches zwischen 20 mm und 80 mm ausgebildet sind.

Die Tiefen t₂ und t₁ sind mit t₂ ≥ 3 mm und mit t₂ ≤ t₁ ≤ P_{T} ausgebildet, wobei P_{T} die maximale Profiltiefe im Bereich der die Profilblockreihe 2 begrenzenden Umfangsrille 5 und 6 bildet. Beispielsweise ist die maximale Profiltiefe P_{T} mit P_{T} = 9 mm ausgebildet.

In den Figuren 1 und 2 ist die Drehrichtung D bei Vorwärtsfahrt des auf ein Fahrzeug montierten Fahrzeugluftreifens eingezeichnet. Ein Paar aus erstem Profilblockelement 8 und zweitem Profilblockelement 9 ist dabei jeweils so gewählt, dass das erste Profilblockelement 8 des Paares jeweils das in Drehrichtung D bei Vorwärtsfahrt des Fahrzeugluftreifens jeweils vorgeordnete Profilblockelement des Paares bildet und das zweite Profilblockelement 9 das nachgeordnete Profilblockelement des Paares bildet.

In einem Ausführungsbeispiel ist das Laufstreifenprofil des Fahrzeugluftreifens ein drehrichtungsgebundenes Laufstreifenprofil. Bei dem drehrichtungsgebundenen Laufstreifenprofil sind die Tiefen t₂ und t₁ so gewählt, dass t₂ ≤ t₁ ausgebildet ist. Beispielsweise ist t₂ = 5mm und t₁ = 9mm.

In einem anderen Ausführungsbeispiel ist das Laufstreifenprofil ein drehrichtungsungebundenes Laufstreifenprofil. Bei dem drehrichtungsungebundenen Laufstreifenprofil ist t₁ = t₂ - beispielsweise t₁ = t₂ = 8mm - gewählt.

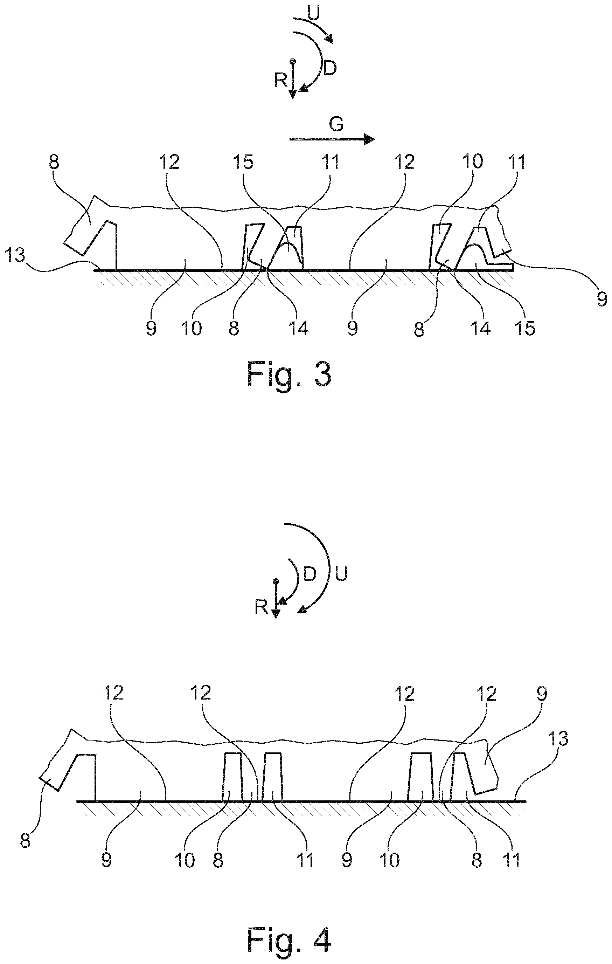

Die Figur 4 zeigt die Profilblockreihe 2 beim Abrollen auf der Straßenoberfläche 13, z. B. bei trockener Straßenoberfläche. Dabei ist zu erkennen, dass sowohl die Profilblockelemente 9 als auch die Profilblockelemente 8 jeweils vollflächig mit ihrer radial äußeren Oberfläche 12 auf der Straßenoberfläche 13 abrollen und Kräfte übertragen.

Figur 3 zeigt die Profilblockreihe 2 beim Bremsen auf einer nassen Straßenoberfläche 13. Die Fahrtrichtung bzw. die Gleitrichtung G ist mit einer speziellen Pfeildarstellung G dargestellt. In Figur 3 ist erkennbar, dass die ersten Profilblockelemente 8 aufgrund ihrer Flexibilität in das durch die erste Querrille 10 zur Verfügung gestellte Volumen hinein kippen und dabei mit ihrer in Gleitrichtung G vorderen Kante der radial äußeren Oberfläche 12 eine Wischlippe 14 bilden, welche den Nässefilm vor der Wischlippe zu einer Bugwelle aufschiebt. Ebenso ist erkennbar, dass die Wischlippe 14 jeweils die vor ihr gebildete Bugwelle 15 des Nässefilms in das durch die Verformung des ersten Profilblockelementes 8 zusätzlich aufgeweitete Volumen der zweiten Querrille 11 drückt. Die zweite Querrille 11 nimmt das Wasser auf und leitet es in die die Profilblockreihe 2 begrenzenden Umfangsillen 5 und 6.

In analoger Weise zur Ausbildung der Profilblockreihe 2 ist - wie in Figur 1 dargestellt ist - auch die Profilblockreihe 3, die Profilblockreihe 1 und die Profilblockreihe 4 jeweils aus in Umfangsrichtung U hintereinander ausgebildeten Paaren von ersten Profilblockelementen 8 und zweiten Profilblockelementen 9 ausgebildet, wobei die ersten Profilblockelemente 8 und die zweiten Profilblockelemente 9 jeweils durch zweite Querrillen 11 und die Paare von Profilblockelementen jeweils durch erste Querrillen 10 voneinander getrennt sind.

In dem in Figur 1 dargestellten Ausführungsbeispiel sind die Querrillen 10 einer Profilblockreihe jeweils mit einer anderen Neigungsorientierung ihrer Neigung α zur axialen Richtung A als die entsprechenden Querrillen 10 der benachbarten Profilblockreihen ausgebildet.

### Bezugszeichenliste

### (Teil der Beschreibung)

- 1: Profilblockreihe
- 2: Profilblockreihe
- 3: Profilblockreihe
- 4: Profilblockreihe
- 5: Umfangsrille
- 6: Umfangsrille
- 7: Umfangsrille
- 8: Erstes Profilblockelement
- 9: Zweites Profilblockelement
- 10: Erste Querrille
- 11: Zweite Querrille
- 12: Radial äußere Oberfläche
- 13: Straßenoberfläche
- 14: Wischlippe
- 15: Bugwelle des Wasserfilms

## Patentansprüche

1. Laufstreifenprofil eines Fahrzeugreifens - insbesondere eines Fahrzeugluftreifens - mit wenigstens einer über den Umfang des Reifens erstreckten und in axialer Richtung A durch zwei Umfangsrillen (5,6) begrenzten Profilblockreihe (2), welche aus in Umfangrichtung U des Reifens hintereinander angeordneten und jeweils durch erste Querrillen (10) von einander beabstandeten Paaren von Profilblockelementen ausgebildet ist, wobei jedes Paar von Profilblockelementen zwei in Umfangsrichtung U hintereinander angeordnete und durch eine zweite Querrille (11) voneinander beabstandete Profilblockelemente (8,9) aufweist, **welche in radialer Richtung R nach außen hin durch eine die Bodenkontaktoberfläche bildende radial äußere Oberfläche (12) begrenzt werden,** und wobei die ersten (19) und die zweiten (11) Querrillen sich jeweils - insbesondere geradlinig - ausgehend von der einen die Profilblockreihe (2) begrenzenden Umfangrille (5) bis in die andere die Profilblockreihe (2) begrenzende Umfangrille (6) erstrecken,
**dadurch gekennzeichnet,**
**dass** das in Drehrichtung D bei Vorwärtsfahrt vorgeordnete erste Profilblockelement (8) des Paares jeweils mit einer in Umfangsrichtung gemessenen Breite a mit 2mm≤ a ≤5mm und das nachgeordnete zweite Profilblockelement (9) des Paares mit einer in Umfangsrichtung gemessenen Breite c mit c≥20mm ausgebildet ist und
**dass** die erste Querrille (10) jeweils mit einer in Umfangsrichtung U gemessenen Breite b₁ mit b₁ ≥1mm und die zweite Querrille (11) jeweils mit einer in Umfangsrichtung U gemessenen Breite b₂ mit b₂ ≥1mm ausgebildet ist.

2. Fahrzeugreifen gemäß den Merkmalen von Anspruch 1,
wobei die Breite b₂ mit b₂ ≤5mm ausgebildet ist.

3. Fahrzeugreifen gemäß den Merkmalen von Anspruch 1 oder 2,
wobei die Breite b₁ mit b₁ ≤5mm ausgebildet ist.

4. Fahrzeugreifen gemäß den Merkmalen von einem der vorangegangenen Ansprüche,
wobei die Breite b₁ und die Breite b₂ mit b₂ > b₁ ausgebildet sind.

5. Fahrzeugreifen gemäß den Merkmalen von einem der vorangegangenen Ansprüche,
wobei die ersten Querrillen (10) mit einer in radialer Richtung R gemessenen Tiefe t₁ und die zweiten Querrillen (11) mit einer in radialer Richtung R gemessenen Tiefe t₂ mit t₂<t₁ und mit 3mm ≤ t₂ ausgebildet sind.

6. Fahrzeugreifen gemäß den Merkmalen von einem der vorangegangenen Ansprüche,
bei dem die Breite c mit 80mm ≤ c ausgebildet ist.

7. Fahrzeugreifen gemäß den Merkmalen von Anspruch 1,
bei dem zumindest jeweils die in Drehrichtung D bei Vorwärtsfahrt einem Paar vorgeordnet angeordnete erste Querrille (10) und die das Paar trennende zweite Querrille (11) parallel zueinander verlaufend angeordnet sind.

## Claims

1. Tread profile of a vehicle tyre - in particular a pneumatic vehicle tyre - with at least one row of profile blocks (2), which is made to extend over the circumference of the tyre and is bounded in the axial direction A by two circumferential grooves (5, 6) and which is formed by pairs of profile block elements arranged one behind the other in the circumferential direction U of the tyre and spaced apart from one another in each case by first transverse grooves (10), wherein each pair of profile block elements comprises two profile block elements (8, 9) which are arranged one behind the other in the circumferential direction U and spaced apart from one another by a second transverse groove (11) and which are bounded outwardly in the radial direction R by a radially outer surface (12) forming the ground contact surface, and wherein the first (19) and the second (11) transverse grooves extend in each case - in particular in a straight line - from the one circumferential groove (5) bounding the row of profile blocks (2) into the other circumferential groove (6) bounding the row of profile blocks (2),
**characterized**
**in that** the first profile block element (8) of the pair, arranged in front in the direction of rotation D during forward travel, is formed in each case with a width a, measured in the circumferential direction, where 2 mm ≤ a ≤ 5 mm and the second profile block element (9) of the pair, arranged thereafter, is formed with a width c, measured in the circumferential direction, where c ≥ 20 mm and
**in that** the first transverse groove (10) is formed in each case with a width b₁, measured in the circumferential direction U, where b₁ ≥ 1 mm and the second transverse groove (11) is formed in each case with a width b₂, measured in the circumferential direction U, where b₂ ≥ 1 mm.

2. Vehicle tyre according to the features of Claim 1,
wherein the width b₂ is formed where b₂ ≤ 5 mm.

3. Vehicle tyre according to the features of Claim 1 or 2,
wherein the width b₁ is formed where b₁ ≤ 5 mm.

4. Vehicle tyre according to the features of one of the preceding claims,
wherein the width b₁ and the width b₂ are formed where b₂ > b₁.

5. Vehicle tyre according to the features of one of the preceding claims,
wherein the first transverse grooves (10) are formed with a depth t₁, measured in the radial direction R, and the second transverse grooves (11) are formed with a width t₂, measured in the radial direction R, where t₂ < t₁ and where 3 mm ≤ t₂.

6. Vehicle tyre according to the features of one of the preceding claims,
in which the width c is formed where 80 mm ≤ c.

7. Vehicle tyre according to the features of Claim 1, in which at least in each case the first transverse groove (10) arranged in front of a pair in the direction of rotation D during forward travel and the second transverse groove (11), separating the pair, are arranged running parallel to one another.

## Revendications

1. Profil de bande de roulement d'un pneumatique de véhicule, en particulier d'un pneumatique de véhicule à air, comprenant au moins une rangée de blocs de profilé (2) qui s'étend sur la circonférence du pneumatique, qui est délimitée dans la direction axiale A par deux rainures circonférentielles (5, 6) et qui est formée de paires d'éléments de blocs de profilé qui sont disposées les unes derrière les autres dans la direction circonférentielle U du pneumatique et espacées les unes des autres par des premières rainures transversales (10), chaque paire d'éléments de bloc de profilé comportant deux éléments de bloc de profilé (8, 9) qui sont disposés l'un derrière l'autre dans la direction circonférentielle U, qui sont espacés l'un de l'autre par une deuxième rainure transversale (11) et qui sont délimités vers l'extérieur dans la direction radiale R par une surface (12) radialement extérieure formant la surface de contact avec le sol et les première (19) et deuxième (11) rainures transversales s'étendant chacune, en particulier de manière rectiligne, depuis une première rainure circonférentielle (5), délimitant la rangée de blocs de profilé (2), jusque dans l'autre rainure circonférentielle (6) délimitant la rangée de blocs de profilé (2),
**caractérisé en ce que**
le premier élément de bloc de profilé (8) de la paire, disposé en avant par référence au sens de rotation D lors du roulement en avant, est formé avec une largeur a, mesurée dans la direction circonférentielle, telle que 2 mm ≤ a ≤ 5 mm et le deuxième élément de bloc de profilé (9) de la paire, disposé en arrière, est formé avec une largeur c, mesurée dans la direction circonférentielle, telle que c ≥ 20 mm et **en ce que** la première rainure transversale (10) est formée à chaque fois avec une largeur b₁, mesurée dans la direction circonférentielle U, telle que b₁ ≥ 1 mm et la deuxième rainure transversale (11) est formée avec une largeur b₂, mesurée dans la direction circonférentielle U, telle que b₂ ≥ 1 mm.

2. Pneumatique de véhicule selon les caractéristiques de la revendication 1,
la largeur b₂ étant formée de telle sorte que b₂ ≤ 5 mm.

3. Pneumatique de véhicule selon les caractéristiques de la revendication 1 ou 2,
la largeur b₁ étant formée de telle sorte que b₁ ≤ 5 mm.

4. Pneumatique de véhicule selon les caractéristiques de l'une des revendications précédentes,
la largeur b₁ et la largeur b₂ étant formées de telle sorte que b₂ > b₁.

5. Pneumatique de véhicule selon les caractéristiques de l'une des revendications précédentes,
les premières rainures transversales (10) étant formées avec une profondeur t₁ mesurée dans la direction radiale R et les deuxièmes rainures transversales (11) étant formées avec une profondeur t₂ mesurée dans la direction radiale R, avec t₂ < t₁ et 3 mm ≤ t₂.

6. Pneumatique de véhicule selon les caractéristiques de l'une des revendications précédentes,
la largeur c étant formée de telle sorte que 80 mm ≤ c.

7. Pneumatique de véhicule selon les caractéristiques de la revendication 1,
au moins la première rainure transversale (10) disposée en avant d'une paire par référence au sens de rotation D lors du roulement vers l'avant et la deuxième rainure transversale (11) séparant la paire étant disposées parallèlement l'unee à l'autre.
